# EUROPEAN PATENT APPLICATION

(11) **EP 0 622 743 A2**
(43) Date of publication of application: **02.11.1994**
(21) Application number: 94102229.5
(22) Date of filing: 14.02.1994
(51) Int. Cl.: G06F 15/403, G06F 15/40

(54) **Method for automated grouping of objects in folders**

(30) Priority: 28.04.1993 US 54337
(71) Applicant: International Business Machines Corporation, Armonk, N.Y. 10504 (US)
(72) Inventor: Bushaw, Kenneth A., Raleigh, NC 27612 (US); Pearson, Glenn A., Longmont, CO 80503 (US); Salvadore, John M., Boulder, CO 80303 (US)
(74) Representative: Teufel, Fritz, Dipl.-Phys.

(57) **Abstract**

A computer having a file management system and a plurality of objects organized in folders is presented. The file management system allows for the automatic maintenance of folders. A query basis is created for each folder, the basis consisting of a description of contents of folder. That is, the query basis describes the criteria for those objects which are to be included as contents of the folder. Upon a pre-specified interval or trigger event, the contents of the folder are updated by the file management system automatically. This relieves the user of the task of "filing" relevant objects in a folder and insures that the contents of a folder are, at any moment, complete and up to date.

## Description

### FIELD OF THE INVENTION

The present invention relates to the management of data within a computer system. More specifically, this invention relates to an improved method and apparatus for managing objects within a computer system by automating the manner in which they are organized into subsets or folders.

### BACKGROUND OF THE INVENTION

Managing information is an endemic problem to any type of computer system. Generically, the challenge is to organize objects of various types in a way that provides simple access and use. The problem can be illustrated by considering the challenges facing office automation.

Office automation is a general term which is used for a variety of computer applications which enable organizations to manage their information. Applications which allow businesses to store and retrieve correspondence and reports electronically, distribute documents electronically, integrate data files with text, and generally support the day-to-day activities of office personnel fall under this umbrella term.

As in non-automated environments, the automated office has a need to organize the documents in a manner that allows for easy retrieval and a clustering of like information in a single place so that a user who has to work on the information has all the relevant information quickly and easily. In non-automated environments, this was often achieved by the user filing related documents in a single cardboard folder which was then kept in a desk or file cabinet. The cost of such organization in filing effort and filing time could be considerable. Further, the system was not infallible: filing backlogs could result in a critical document not being in a folder when a user referenced it. In addition, manual misfiles could occur.

The organizational requirement remains in the electronic office. The most primitive techniques used to "file" electronic documents are partitioned data sets (PDS) and directories. Partitioned data sets are storage areas on the storage medium. Documents are filed in the PDS in the order created and there is no other relationship regarding the order of the documents. Directories are similar to partitioned data sets in that they are physical storage areas for documents or files. Documents contained in a directory have no logical organization except that implied by their presence in the particular directory. In both schemes, if a user wanted a document pertaining to a specific topic, the user would need to first identify the PDS or directory in which such documents were filed and then sequentially review each of the relevant documents, identifying those in which he was interested. Were the same need to occur at some later time, the same review of all documents in the PDS or directory would be required. More seriously, if a document had been mis-assigned by another user, it would never be found.

The problems outlined above, although discussed in terms of office automation, are, in fact, applicable to almost every endeavor involving a computer system. Accordingly, the following discussion will be directed towards a more general context.

Today's state of the art workstation graphical user interface is based on the concept of objects. Each object has associated with it a list of properties: each property has a name and a value which may be accessed by specifying the name. Properties may be used to store descriptive information about objects, such as names, comments, subject matter, etc.

Folders are specific types of objects (namely, container objects) which may contain objects/documents or other folders. Folders provide a convenient way to group objects that have some temporary or permanent relationship known to a user. Thus, folders are an implementation of a conceptual organizational scheme which creates a relationship within a group of objects.

A user accesses a folder independently from the objects it contains. However, once a folder is accessed, all related objects it contains are available. Generally, these objects are separately identifiable by the user and freely moved into or out of folders. In short, folders are a mechanism for logically organizing objects independent of their storage location and relationship to each other.

Within a folder, objects can be organized in a variety of ways. One method employs a linear structure in which objects are organized by placing a subset of objects in a user specified position within a particular folder. Examples of such linear structures are: sequentially by a specified descriptor, sequentially by date, or by a defined position number. Alternately, objects can be grouped in hierarchical structure by nesting objects that are folders: that is, putting a folder within another folder.

In most systems, each object is associated with separate object definitions including descriptors, access control and object content format information. These definitions or characteristics could be used by an office automation system to implement specific functions. For example, in U.S. Patent No. 5,101,345, McPhail, two objects (in the embodiment, documents) may be identified as having a fixed relation for a given application: essentially, the documents are "stapled" together.

Although useful devices, folders in the prior art were not without problems. For example, most users wish to define a folder by grouping objects found as a result of a specific search. (In essence, the commonality of these contained objects is that they all met the search criteria when the search was conducted.) Today, the user would create such a folder by manually performing the search and gathering the result. After the initial creation of a folder, however, the folder must still be maintained to ensure it contains all relevant objects -- even those just created. Thus, in prior art, the user would have to manually re-execute the search, delete the objects that no longer qualified and add the new ones. This is at best time consuming and, at worse, impractical in cases in which the objects are very dynamic or the search is complex. As a result, such updates are often not performed and users may work with folders whose contents are woefully inadequate or out-of date.

Another problem that occurs is that the user may not remember or record the exact search used to create the folder. In an update, as the user tries to recreate his search, it may result in a search request which is different than the original -- thus the folder will contain objects selected on the basis of two differing searches and its integrity will be compromised.

### OBJECTS OF THE INVENTION

Accordingly, it is an object of this invention to eliminate the need for a user to manually select objects to be organized together into a single folder and manually update that selection to maintain the currency of that folder.

It is a further object of this invention to provide an improved method of maintaining object organization which does the search and update of folders automatically.

It is a further object of this invention to provide an improved method of folder update which consistently uses the same search, thus maintaining the integrity of the folder contents, as well as avoiding the problem of misfiles due to human error.

### SUMMARY OF THE INVENTION

These and other objects, features and advantages of the invention are achieved by the query folder method disclosed herein. In a system which is comprised of a computer system having a plurality of applications and at least one file management system and a plurality of objects, where file management system allows for organization of objects as folders, the invention comprises a method of associating with each folder a query basis created by the user. The query basis describes criteria which determines whether or not an object will be included in the folder. Thus, the query basis describes a series of user-defined attributes or a search algorithm: if an object satisfies the search, it will be included in the folder; otherwise, it is excluded.

The method includes a step of having the system dynamically update the contents of the folders based on their query bases. That is, the file management system does a search on all objects in the system, selecting those which match the criteria of the query basis and associating those objects with a folder. Together with executing the search, it may modify attributes of the folder to indicate such things as the date of the search (or folder update).

The method further includes a plurality of means by which the search may be triggered. For example, the search may be initiated by a user opening a folder -- thus insuring that the user will be working with the most current data; the search may be triggered by the addition of a specified number of objects into the system; the search may be triggered on a specific schedule or time period; or the search may simply be triggered by an explicit user request.

In an alternative implementation, the method further includes a feature by which the query folders may ONLY be updated by the system. This ensures that the contents of the folder are all objects satisfying the query basis, but only those objects. In this way, maximum folder integrity can be ensured.

### BRIEF DESCRIPTION OF DRAWINGS

- FIG. 1: is a flow diagram of the Query Folder method.
- FIG. 2: is an flow chart of the logic that might be implemented to determine when a refresh should be performed.
- FIG. 3: is an alternative flow chart for determining when a refresh should be performed.
- FIG. 4A and 4B: are two methods for updating a folder.

### DETAILED DESCRIPTION OF INVENTION

The Query Folder invention finds application in an automated object management system that supports the logical grouping of objects, presenting collections of objects in folders. Such a management system could execute in a host processing system or in any workstation environment (for example, in an IBM PS/2 model 80 running OS/2 2.0 (Trademark of International Business Machines Corporation).) The functions of the system would include facilities for actions such as:
- creating objects
- storing objects
- retrieving objects
- editing objects
- assigning attributes to objects.

In its simplest embodiment, the automated object management system could be an office automation system where the objects consist of files or documents.

A query folder allows a user to automatically gather objects into a folder via statements describing common characteristics of the desired objects. Thus, a query folder typically has associated with it the following information:
(1) a query basis which is used to find and qualify objects (the search criteria);
(2) the date and time of the most recently conducted search; and
(3) the objects that satisfied the most recently conducted search (i.e. the objects which belong to the folder).

The term "query basis" refers generally to all the information that determines whether or not an object qualifies to be in the folder. Thus, the first component of the query basis is the required characteristics of an object. To these characteristics are added Boolean operators and other combinatorial and processing logic which allows combinations and qualifications of multiple characteristics. For example, a characteristic of an object might be the timestamp of its last update. A query folder can gather all objects that have a last update timestamp greater than a specified value. Another characteristic of an object could be its topic. Thus, a query basis could be "All objects whose topic is "travel expense" and whose timestamp is later than July 17, 1989.

In its simplest form, the allowable operators that are supported for the query folder are the Boolean comparative tests of an object's attributes, namely: equal to (=), not equal to (#), less than (<), greater than (>), less that or equal to (≦), and greater than or equal to (≧). These tests may be combined with the other Boolean operators: and (∧), or (∨), and not (∼), producing more complex operations. An example of a typical operation would be: (topic equal travel expense) and (timestamp greater than July 17, 1989).

The query basis also includes an explicit or implicit domain to be searched (the scope of the search). An example of this type of basis would be: c:\ and (D:\DOCS but not D:\DOCS\MYDOC.TXT). This would identify all objects in the C-directory which are in the D:\DOCS directory but excludes the object MYDOC.TXT which is in the D:\DOCS directory.

The query basis can be changed by the user to change the results of the query and thus the contents of the folder.

Whether the date and time of the last search are required as part of the query folder characteristics depends on the specific implementation. For example, the date and time of the last search may be irrelevant in situations where it is possible and affordable to keep the folder continuously up to date. Otherwise, it is needed to determine when the next automatic periodic update should occur and perhaps for display so users can determine whether or not the folder's state is sufficiently current for their needs.

There are three major components of Query Folder operation:
1. Setting (or changing) the query basis and creating (or recreating) the folder
2. Determining when to update the folder
3. Updating the folder

For simplicity, the following description refers only to a single folder. It will be clear to those skilled in the art that, in practice, each system will have a plurality of folders, each, generally, with a different query basis.

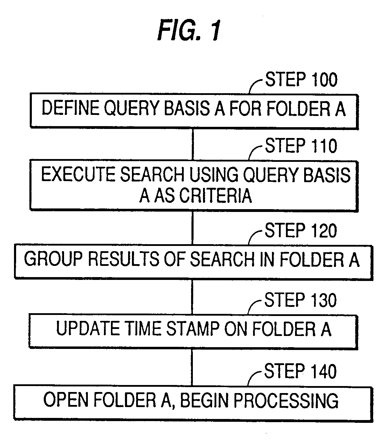

FIG. 1 is a flow diagram of one implementation of setting the query basis and creating a query folder. Step 100 of FIG. 1 shows the initial action of defining the query basis of Folder A. In one implementation, this would be done by a user at a workstation, entering the data into the system. Ideally this is accomplished in a graphical user interface by a "settings" or "query" view of the folder that provides a friendly way to gather the information and associate it with the folder. However obtained, once the query basis is established or modified, it is used as the basis for all subsequent updates.

Step 110 is the execution of the search using as the search terms the query basis created in the preceeding step. The objects which satisfy the search criteria are then grouped and associated with Folder A, essentially creating Folder A. This is represented by Step 120. Thus, once a query basis is set, folder creation is a matter of gathering all of the objects which satisfy the search and qualification parameters supported by the folder.

Continuing to refer to FIG. 1, Step 130 shows the system updating the time stamp of Folder A, to indicate that the contents were updated as of that time. Step 140 shows the user working with the newly created folder. Clearly, this step need not be executed: the user could merely create a folder and then go on to other tasks.

Once a query folder is created, it must be able to refresh itself by re-executing the search criteria upon user demand or other significant activity. The result effectively replaces the existing contents (objects) of the folder with those of the newly-conducted search, and the folder's last-update timestamp is updated. The refresh desired might be either full or partial. That is, the search could be reexecuted across all of the objects in the search domain (full refresh) or objects could be added or deleted from the folder based on testing only that object's latest attributes (partial refresh).

In some cases, it is desirable for a query folder to automatically perform a full or partial refresh. In such an event, the refresh would be conducted on some pre-established schedule or trigger event. For example, in addition to those refreshes explicitly triggered by user requests, the refresh cycle could be defined as follows:
(1) Full refresh periodically at a user-defined rate (i.e. daily, monthly, hourly, etc.)
(2) Full refresh each time the folder is opened;
(3) Partial refresh each time an object in the folder is selected or accessed in some way;
(4) Partial refresh each time an object is created or changed outside of the folder and becomes a candidate for inclusion in the folder; or
(5) A combination of the above.

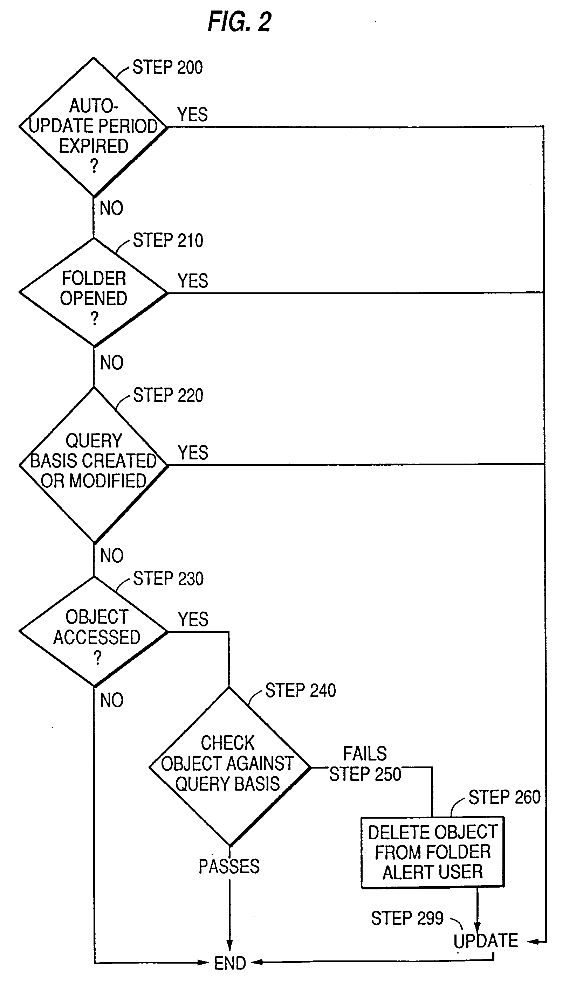

FIG. 2 is an flow chart of the logic that might be implemented to determine when a refresh should be performed. Step 200 triggers an update if an auto-update period has expired. Step 210 triggers an update when the folder is being opened. Step 220 triggers an update if the query basis has just been created or modified. Once the folder is opened, if an object from the folder is selected (Step 230), the object is checked against the query basis to ensure that it still satisfies the criteria (Step 240). (An example of a situation in which this would be necessary is the following: if the criteria were a timestamp, a static object which originally satisfied the criteria would, after some period, fail the test.) If the test fails (Step 250), the object is deleted from the folder, the user is alerted to that fact (Step 260), and an update is initiated (Step 299).

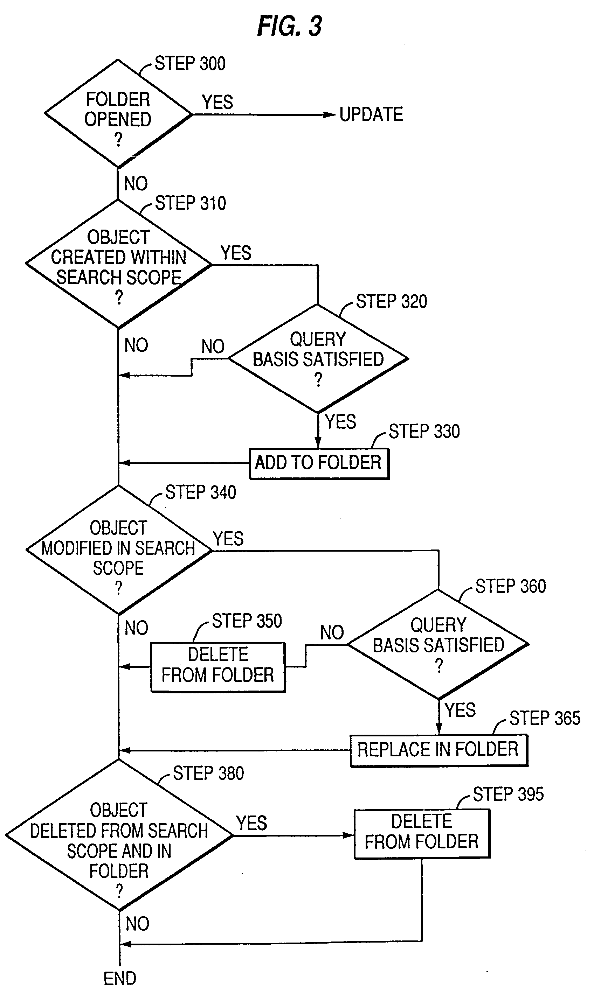

The logic outlined in FIG. 2 will provide adequate refreshing for most purposes with relatively little processing overhead providing the auto-update time is relatively long compared to the time required to perform the search. However, if the need for currency is sufficient to justify more complexity and possibly more processing overhead, the logic shown in FIG. 3 may be used. FIG. 3 assumes updating occurs only while the folder remains open. Step 300 triggers an update (Step 385) when the folder is opened. If an object is created which is within the search scope of the query basis (Step 310), the new object is checked against the query basis (Step 320) and added to the folder if it qualifies (Step 330). If an object is modified which is within the search scope of the query basis (Step 340), the modified object is checked against the query basis (Step 350). If it satisfies the query basis, it is added to the folder. If it does not satisfy the query basis as modified, but previously was in the folder, it is deleted from the folder (Step 370). If an object is deleted from the search scope and is within the folder, (Step 380), it is removed from the folder (Step 395).

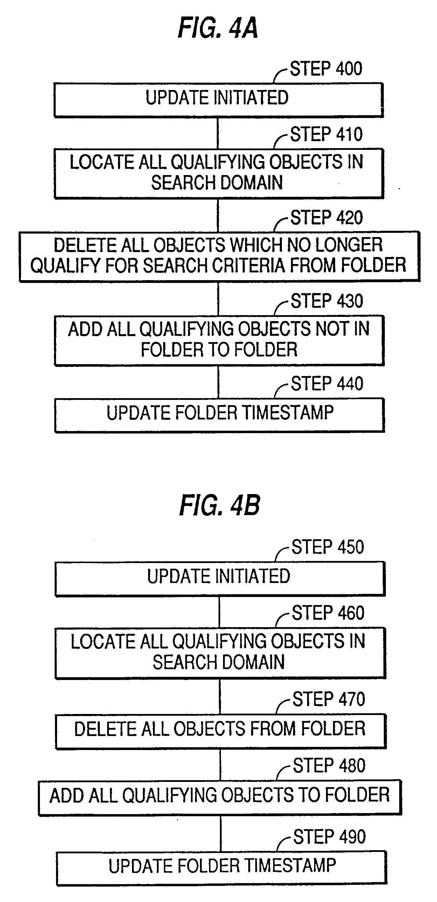

The method for updating the folder can be accomplished in several ways. FIG. 4A and 4B are flow charts of two methods. In FIG. 4A, Step 400 shows the Update Trigger. Step 410 is comprised of locating all qualifying objects in the search domain. Step 420 is comprised of deleting all objects from the folder which no longer qualify. Step 430 is comprised of adding all qualifying objects not in the folder to the folder. The timestamp is updated in Step 440.

In FIG. 4B an alternative approach is used. Step 450 shows the Update Trigger. Step 460 is comprised o locating all qualifying objects in the search domain. Step 470 is comprised of deleting all objects from the folder. Step 480 is comprised of adding all qualifying objects to the folder. The timestamp is updated in Step 490.

If the query basis is modified, most implementations will have an update initiated automatically.

The OS/2 2.0 program's Desktop Folder (trademark of International Business Machines Corporation) is an example of a program in which query folder may be implemented. In Desktop Folder, an additional page in the settings notebook could be added in the "settings view" function provided by the program. The query basis would be defined on this page as a set of expressions combined with Boolean logic. The expressions would be evaluated and the query folder's contents would be refreshed at least at the following times:
- when the folder is opened;
- when the query folder's settings view was closed. (Note that the query basis can be changed only when the settings view is open);
- when a refresh command is sent by a user (i.e on demand); or
- at specified time intervals.

A simple example of the operation of the Query Folder is as follows. Assume that the query basis for a folder is the logical "anding" of the requirements:
- search path = D:\DIR1
- EXT = XX*
This is equivalent to specifying that the search should be made on the D drive, only in directory DIR1, and only those files whose extensions start with "XX" should be selected.

If the D:\DIR1 directory has the following files in it:
FILE1.XX
FILE2.XXY
FILE3.X
FILE1.XXY
FILE2.YYY
FILE3.YYY
FILE1.ZZZ
then, when the query folder is opened, the folder is updated to show it contains the following files:
FILE1.XX
FILE2.XXY
FILE1.XXY
If file FILE4.XXX is created and file FILE2.XXY is deleted after the folder is opened, and updates are initiated when the folder is opened, then the folder continues to reflect FILE1.XX, FILE2.XXY and FILE1.XXY until it is reopened. At that time, the folders contents will contain:
FILE1.XX
FILE1.XXY
FILE4.XXX
In the preferred embodiment of this invention, the only means by which an object can be moved into or out of a folder is by use of the automatic update facility. This insures that only those objects which satisfy the query basis (and, depending on the update strategy -- all such objects) are contained within the folder.

The method of the query folder provides a more convenient and reliable technique to maintain folders. Using this invention, the user is freed from having to manually reexecute the search and manually add or delete objects from the folder. The user is also freed from having to separately maintain the search criteria and time of last search. The folder becomes an intelligent folder, being able to refresh itself and inform the user of its current state. This new container object can be a powerful addition to the computer desktop environment and is expected to become more and more important as objects of interest to a user are shared and widely distributed on networks to which the user has access.

It is within the scope of the invention that some of the steps in the flow diagrams of FIG. 1 through FIG. 4B can be placed in a different order or, in some cases, deleted.

Although a specific embodiment of the invention has been disclosed, it will be understood by those having skill in the art that changes can be made in the specific embodiment disclosed, without departing from the spirit and scope of the invention.

## Claims

1. A method for creating query folders stored in an interactive information handling system, said system comprising a workstation with a display used by an end user, said system containing a plurality of objects and a plurality of folders, said query folders being automatically maintained, said method comprising the steps of:
identifying a first set of criteria;
displaying on a screen, a screen image to permit an end user to enter a said first set of criteria;
associating said first set of criteria with a first query folder;
selecting from a plurality of objects a first set of objects, said set containing each object which satisfies said first set of criteria;
associating said first set of objects with said first query folder;
identifying a set of update conditions, said conditions being those conditions under which an update of said first query folder will be initiated;
associating said set of update conditions with said first query folder;
upon an occurrence of one or more of said set of update conditions, initiating an update of said first query folder to be performed by said system.

2. A method as in claim 1, wherein upon said update of said first query folder, a timestamp of said update is associated with said first query folder.

3. A method as in claim 1, wherein said update is comprised of verifying that all objects in said first set of objects still satisfy said first set of criteria, deleting each object in said first set of objects which does not satisfying said first set of criteria, and adding into said first said of objects, each object from said plurality of objects which satisfies said first criteria.

4. A method as in claim 1, wherein one of said update conditions comprises the condition that a user accesses said first folder.

5. A method as in claim 1, wherein said first set of criteria may be modified by entering said modification into said system through said keyboard.

6. A method as in claim 5, wherein one of said update conditions comprises the condition that said first set of criteria has been modified.
